# EUROPÄISCHE PATENTSCHRIFT

(11) **EP 4 448 358 B1**
(45) Veröffentlichungstag und Bekanntmachung des Hinweises auf die Patenterteilung: **08.10.2025**
(21) Anmeldenummer: 22765756.6
(22) Anmeldetag: 10.08.2022
(51) Int. Cl.: B60W 10/08, B60L 50/00, B60W 30/18, B60W 50/02, B60W 50/038

(54) **ANTRIEBSVORRICHTUNG FÜR EIN FAHRZEUG**
DRIVE DEVICE FOR A VEHICLE
DISPOSITIF D'ENTRAÎNEMENT POUR VÉHICULE

(30) Priorität: 15.12.2021 DE 102021133186
(43) Veröffentlichungstag der Anmeldung: 23.10.2024
(73) Patentinhaber: Audi AG, 85045 Ingolstadt (DE)
(72) Erfinder: PASSLER, Manuel, 91781 Weissenburg (DE)
(86) Internationale Anmeldenummer: PCT/EP2022/072419
(87) Internationale Veröffentlichungsnummer: WO 2023/110172

(56) Entgegenhaltungen:
- DE-A1- 102005 040 786
- DE-A1- 102010 017 863
- DE-A1- 102012 201 653
- FR-A1- 3 102 964

## Beschreibung

Die Erfindung betrifft eine Antriebsvorrichtung für ein insbesondere elektrisch betriebenes Fahrzeug nach dem Oberbegriff des Anspruches 1.

Eine solche Antriebsvorrichtung weist ein Fahrpedal auf, das in Signalverbindung mit einer Antriebssteuerung ist. Die Antriebssteuerung bildet anhand eines fahrerseitig initiierten Fahrpedals-Rohwerts ein gewünschtes Drehmoment. Ein Pulswechselrichter setzt dieses Soll-Drehmoment in Verbindung mit einer Elektromaschine um. Die Elektromaschine ist hier lediglich beispielhaft erwähnt. Alternativ dazu kann auch allgemein ein beliebig anderer Aktor herangezogen werden.

Bei entsprechend betätigtem Fahrpedal ist das vom Antrieb erzeugte Antriebsmoment größer als eine fahrzeugspezifische Destabilisierungsschwelle, ab der im Fahrbetrieb eine Haftreibwertgrenze zwischen den Fahrzeugrädern und der Fahrbahn überschritten wird, so dass es zu einer Fahrzeug-Destabilisierung kommt. Dabei wird unterschieden zwischen einer Hochhaftreibwertgrenze bei trockenem Straßenbelag, einer mittleren Haftreibwertgrenze bei nassem Straßenbelag und einer Niedrighaftreibwertgrenze bei vereistem Straßenbelag. Speziell bei einem Fahrzeug mit hoher Leistungsfähigkeit des Antriebs können von der Elektromaschine Antriebsmomente umgesetzt werden, die selbst die mit der Hochhaftreibwertgrenze korrespondierende Destabilisierungsschwelle überschreiten.

Im Hinblick auf die Fahrzeugsicherheit muss die funktionale Sicherheit des Fahrpedals, der Antriebssteuerung und des Pulswechselrichters sehr hohe Sicherheitsanforderungen erfüllen, damit in dem Signalbearbeitungspfad zwischen dem Fahrpedal und dem Pulswechselrichter eine fehlerhaft zu hohe Erzeugung eines Antriebsmoments verhindert wird, welches die Destabilisierungsschwelle überschreitet.

Aus der FR 3 102 964 A1 ist eine gattungsgemäße Antriebsvorrichtung für ein Fahrzeug bekannt.

Die Aufgabe der Erfindung besteht darin, eine Antriebsvorrichtung mit einem betriebssicheren Signalbearbeitungspfad zwischen dem Fahrpedal und der Antriebseinheit bereitzustellen, der im Vergleich zum Stand der Technik konstruktiv einfach aufgebaut ist und insbesondere der Pfad der Antriebssteuerung eine höhere Fehlertoleranz erlaubt.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung für ein Fahrzeug aus, bei der ein Fahrpedal in Signalverbindung mit einer Antriebssteuerung verbunden ist. Die Antriebssteuerung fordert anhand eines fahrerseitigen Fahrpedals-Rohwerts ein Drehmoment beim Aktorsteuergerät an. Mit dem von der Antriebssteuerung geforderten bzw. erzeugten Drehmoment wird ein Aktorsteuergerät, nämlich ein Pulswechselrichter, eines Aktors, nämlich eine Elektromaschine, angesteuert. Gemäß dem kennzeichnenden Teil des Anspruches 1 weist das Aktorsteuergerät eine Freischalteinrichtung auf, mittels der eine Fehlerbestimmung des von der Antriebssteuerung angeforderten Drehmoments durchführbar ist.

Erfindungsgemäß wird also ein Signalbearbeitungspfad zwischen dem Fahrpedal und dem Aktuator (z.B. der Elektromaschine) bereitgestellt, in dem die Freischalteinrichtung unmittelbar im Aktorsteuergerät verbaut ist. Das von der Antriebssteuerung geforderte Antriebsmoment wird daher nicht in der Antriebssteuerung selbst, sondern vielmehr prozesstechnisch nachgeschaltet erst im Aktorsteuergerät geprüft. Mittels der erfindungsgemäßen Freischalteinrichtung wird ein potenziell gefährliches, destabilisierendes Drehmoment erst freigegeben, wenn der Kunde dies explizit wünscht. Diesen Wunsch gibt er mittels Durchtreten des Fahrpedals aus.

Die Routine in der Freischalteinrichtung wird auf der Grundlage des Fahrpedal-Rohwertes, der vordefinierten fahrzeugspezifischen Destabilisierungsschwelle und des von der Antriebssteuerung angeforderten Drehmoments durchgeführt. Vor diesem Hintergrund muss speziell die Signalverarbeitung im Fahrpedal und die Signalverarbeitung im Aktorsteuergerät mit einer im Vergleich zur Signalverarbeitung in der Antriebssteuerung höheren Sicherheitsintegrität ausgelegt werden. Beispielhaft kann die funktionale Sicherheit des Fahrpedals und die funktionale Sicherheit des Aktorsteuergeräts nach ISO 26262 hohe Sicherheitsanforderungen erfüllen (zum Beispiel ASIL D), während die Antriebssteuerung geringere Sicherheitsanforderungen erfüllen kann (zum Beispiel ASIL C). In diesem Fall kann die Antriebssteuerung einfacher und damit kostengünstiger aufgebaut sein, und zwar im Vergleich zu einer Antriebssteuerung, die für höherer Sicherheitsanforderungen (zum Beispiel ASIL D) ausgelegt ist. Alternativ dazu können das Fahrpedal und das Aktorsteuergerät nach ISO 26262 gemäß ASIL C ausgelegt sein, während die Antriebssteuerung mit niedrigerer Sicherheitsanforderung gemäß ASIL B ausgelegt sein kann. Dies ist jedoch abhängig vom Destabilisierungspotenzial der verbauten Antriebsaggregate.

Bei Bestimmung eines fehlerfreien Drehmoments kann die Freischalteinrichtung das von der Antriebssteuerung angeforderte Drehmoment in Richtung Antriebseinheit unlimitiert freigeben. In diesem Fall steuert das Aktorsteuergerät auf der Grundlage des von der Antriebssteuerung angeforderten Drehmoments die Antriebseinheit an. Im Unterschied dazu kann bei Bestimmung eines fehlerbehafteten Drehmoments die Freischalteinrichtung das Drehmoment in Richtung Antriebseinheit sperren. Anstelle dessen kann die Freischalteinrichtung ein Minimal-Drehmoment in Richtung Antriebseinheit freigeben und somit das Drehmoment der Antriebssteuerung limitieren.

Das oben erwähnte Minimal-Drehmoment ist dabei bevorzugt kleiner bemessen als eine fahrzeugspezifische Destabilisierungsschwelle. Ab Erreichen einer solchen Destabilisierungsschwelle wird im Fahrbetrieb eine Haftreibwertgrenze (bei trockenem, nassem oder vereistem Straßenbelag) zwischen den Fahrzeugrädern und der Fahrbahn überschritten, so dass es zu einer Fahrzeug-Destabilisierung kommt.

In einer technischen Umsetzung kann die Routine so ausgelegt sein, dass die Fehlerbestimmung zumindest dann erfolgt, wenn das von der Antriebssteuerung angeforderte Drehmoment größer als die fahrzeugspezifische Destabilisierungsschwelle ist. Demgegenüber kann die Freischalteinrichtung deaktiviert bleiben, sofern das von der Antriebssteuerung angeforderte Drehmoment kleiner ist als die fahrzeugspezifische Destabilisierungsschwelle.

Es ist bevorzugt, wenn die Freischalteinrichtung mit geringem Software-Aufwand realisierbar ist sowie mit wenig Rechenaufwand arbeiten kann. Vor diesem Hintergrund kann die Freischalteinrichtung wie folgt aufgebaut sein: So kann die Freischalteinrichtung einer Vergleicherbaustein aufweisen, in dem der vom Fahrpedal erzeugte Fahrpedal-Rohwert mit einem Grenzwert vergleichbar ist. Der Grenzwert kann bevorzugt aus einem, mit der fahrzeugspezifischen Destabilisierungsschwelle korrelierenden Fahrpedal-Rohwert gebildet sein.

Ist der vom Fahrpedal erzeugte Fahrpedal-Rohwert größer als der Grenzwert, kann der Vergleicherbaustein ein Freigabesignal erzeugen. Mit Hilfe des Freigabesignals kann im Signalbearbeitungspfad ein geschalteter Freigabebaustein das angeforderte Drehmoment der Antriebssteuerung in Richtung Antriebseinheit freigeben. Umgekehrt kann bei einem vom Fahrpedal erzeugten Fahrpedal-Rohwert, der kleiner als der Grenzwert ist, der Vergleicherbaustein ein Sperrsignal erzeugen. Mit Hilfe des Sperrsignals kann der in Signalbearbeitungspfad geschaltete Freigabebaustein das von der Antriebssteuerung angeforderte Drehmoment in Richtung Antriebseinheit sperren. Anstelle dessen kann der Freigabebaustein das Minimal-Drehmoment in Richtung Antriebseinheit freigeben.

Die Freischalteinrichtung weist zudem einen Minimalauswahl-Baustein auf. Dieser ist in Signalverbindung mit dem Freigabebaustein. Im Minimalauswahl-Baustein erfolgt eine Auswahl zwischen einem vordefinierten Drehmomentlimit, das kleiner bemessen ist die Destabilisierungsschwelle, und dem von der Antriebssteuerung angeforderten Drehmoment. Der Minimalauswahl-Baustein wählt aus diesen beiden Parametern den kleineren Wert aus, der als Minimal-Drehmoment festgelegt wird.

Auf diese Weise ist gewährleistet, dass die Freischalteinrichtung das von der Antriebssteuerung angeforderte Drehmoment nur dann in Richtung Antriebseinheit freigibt, wenn gewährleistet ist, dass das Drehmoment kleiner als die Destabilisierungsschwelle ist, oder wenn gewährleistet ist, dass einerseits das Drehmoment größer als die Destabilisierungsschwelle ist, und andererseits auch der vom Fahrpedal erzeugte Fahrpedal-Rohwert größer als der oben definierte Grenzwert ist.

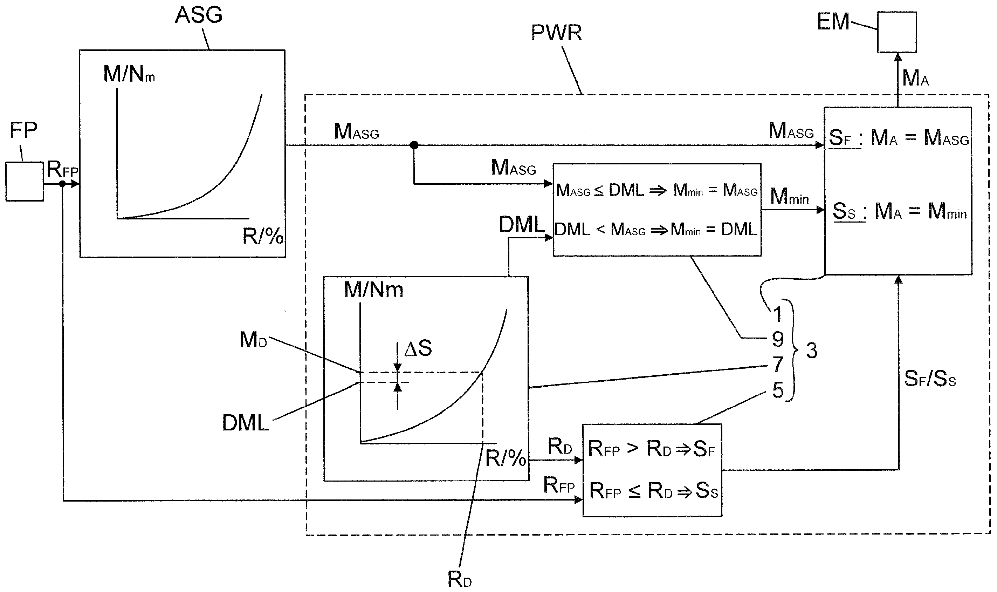

Nachfolgend ist ein Ausführungsbeispiel der Erfindung anhand der beigefügten Figur beschrieben, in der eine Antriebsvorrichtung für ein elektrisch betriebenen Fahrzeugs in einem schematischen Blockschaltdiagramm gezeigt ist.

In der Figur weist die Antriebsvorrichtung ein Fahrpedal FP auf, das in Signalverbindung mit einer Antriebssteuerung ASG ist. Die Antriebssteuerung ASG fordert anhand eines vom Fahrer initiierten Fahrpedal-Rohwerts R_{FP} ein Drehmoment M_{ASG} an. Mit dem Drehmoment M_{ASG} wird im Fahrbetrieb ein Pulswechselrichter PWR einer Elektromaschine EM angesteuert. In der Antriebssteuerung ASG wird das Drehmoment M_{ASG} unter anderem auf der Grundlage einer Kennlinie erzeugt, in der das Drehmoment M_{ASG} in Abhängigkeit vom Fahrpedalweg, das heißt vom Fahrpedal-Rohwert R_{FP} aufgetragen ist. Darüber hinaus gibt es diverse weitere Einflussfaktoren, welche drehmomentenbestimmend sind, wie z.B. Drive Select Vorwahl.

Im weiteren Signalbearbeitungspfad liegt das von der Antriebssteuerung ASG angeforderte Drehmoment M_{ASG} am Signaleingang eines Freigabebausteins 1 an. Der Freigabebaustein 1 ist Bestandteil einer im Pulswechselrichter PWR verbauten Freischalteinrichtung 3, anhand der eine Fehlerbestimmung des von der Antriebssteuerung ASG angeforderten Drehmoments M_{ASG} durchgeführt wird. Sofern die Freischalteinrichtung 3 ein fehlerfreies Drehmoment M_{ASG} bestimmt, gibt der Freigabebaustein 1 das Drehmoment M_{ASG} als ein Antriebsmoment M_{A} in Richtung Elektromaschine EM frei. In diesem Fall steuert also der Pulswechselrichter PWR auf der Grundlage des von der Antriebssteuerung ASG angeforderten Drehmoments M_{ASG} die Elektromaschine EM an.

Sofern die Freischalteinrichtung 3 ein fehlerbehaftetes Drehmoment M_{ASG} bestimmt, sperrt dagegen der Freigabebaustein 1 das Drehmoment M_{ASG} in Richtung Elektromaschine EM. Anstelle dessen gibt der Freigabebaustein 1 ein Minimal-Drehmoment Mₘᵢₙ in Richtung Elektromaschine EM frei.

Wie aus der Figur weiter hervorgeht, weist die Freischalteinrichtung 3 einen Vergleicherbaustein 5 auf, der in Signalverbindung mit dem Freigabebaustein 1 ist. In dem Vergleicherbaustein 5 wird der vom Fahrpedal FP erzeugte Fahrpedal-Rohwert R_{FP} mit einem Grenzwert R_{D} verglichen. Der Grenzwert R_{D} wird aus einer, in einer Datenbank 7 hinterlegten, applizierbaren Kennlinie in den Vergleicherbaustein 5 eingelesen. In der Kennlinie ist das von der Antriebssteuerung ASG angeforderte Drehmoment M_{ASG} in Abhängigkeit von dem Fahrpedal-Rohwert (das heißt Fahrpedalweg) aufgetragen ist. In der Kennlinie ist eine fahrzeugspezifische Destabilisierungsschwelle M_{D} eingetragen, ab der im Fahrbetrieb eine Haftreibwertgrenze zwischen den Fahrzeugrädern und der Fahrbahn überschritten wird, so dass es zu einer Fahrzeug-Destabilisierung kommt. Zudem ist in der Kennlinie der mit der fahrzeugspezifischen Destabilisierungsschwelle M_{D} korrelierende Fahrpedal-Rohwert R_{D} eingetragen, der den Grenzwert für den Vergleicherbaustein 5 bildet.

Bei einem vom Fahrpedal FP erzeugten Fahrpedal-Rohwert R_{FP} größer als der Grenzwert R_{D} wird im Vergleicherbaustein 5 ein Freigabesignal S_{F} erzeugt. Wenn am Signaleingang des Freigabebausteins 1 das Freigabesignal S_{F} anliegt, gibt der Freigabebaustein 1 das von der Antriebssteuerung ASG angeforderte Drehmoment M_{ASG} in Richtung Elektromaschine EM frei.

Sofern dagegen im Vergleicherbaustein 5 der vom Fahrpedal FP erzeugte Fahrpedal-Rohwert R_{FP} kleiner ist als der Grenzwert R_{D}, erzeugt der Vergleicherbaustein 5 ein Sperrsignal Ss. Sofern das Sperrsignal Ss am Signaleingang des Freigabebausteins 1 anliegt, sperrt dieser das von der Antriebssteuerung ASG erzeugte Drehmoment M_{ASG} und gibt anstelle dessen das Minimal-Drehmoment Mₘᵢₙ in Richtung Elektromaschine EM frei. Der Freigabebaustein 1 limitiert daher das von der Antriebssteuerung ASG angeforderte Drehmoment M_{ASG} auf das Minimal-Drehmoment Mₘᵢₙ und gibt dieses in Richtung Elektromaschine EM frei. Ein Fehler in der Antriebssteuerung ASG würde sich somit nicht auf das erzeugte Drehmoment der Elektromaschine EM durchschlagen, sondern auf einen unkritischeren - kontrollierbaren - Wert limitiert werden.

Die Freischalteinrichtung 3 weist zudem einen Minimalauswahl-Baustein 9 auf, der ebenfalls in Signalverbindung mit dem Freigabebaustein 1 ist. In der Figur wird von der, in der Datenbank 7 hinterlegten Kennlinie ein Drehmomentlimit DML in den Minimalauswahl-Baustein 9 eingelesen. Das Drehmomentlimit DML ist um ein Sicherheitsmaß ΔM kleiner bemessen als die Destabilisierungsschwelle M_{D}.

Der Minimalauswahl-Baustein 9 wählt aus dem Drehmomentlimit DML und aus dem von der Antriebssteuerung ASG angeforderten Drehmoment M_{ASG} den kleineren Wert aus und legt diesen als Minimal-Drehmoment Mₘᵢₙ fest. Das Minimal-Drehmoment Mₘᵢₙ liegt zusammen mit dem Drehmoment M_{ASG} am Signaleingang des Freigabebausteins 1 an.

Nachfolgend wird die Funktionsweise der Freischalteinrichtung 3 anhand eines ersten Beispiels erläutert, bei dem das Fahrpedal FP zu 80% durchgedrückt ist, so dass der Fahrpedal-Rohwert R_{FP} bei 80% liegt. Im fehlerfreien Normalbetrieb bestimmt die Antriebssteuerung ASG (anhand der hinterlegten Kennlinie) aus dem Fahrpedal-Rohwert R_{FP} von 80% ein angefordertes Drehmoment M_{ASG} von 3500 Nm. Die Destabilisierungsschwelle M_{D} liegt beispielhaft bei 4000 Nm, während das Drehmomentlimit DML um ein Sicherheitsaufmaß von 100 Nm darunter liegt, und zwar bei 3900 Nm. Der mit der Destabilisierungsschwelle M_{D} korrelierende Fahrpedal-Rohwert R_{D} liegt bei 90%. Da der vom Fahrpedal FP erzeugte Fahrpedal-Rohwert R_{FP} kleiner ist als der Grenzwert R_{D}, wird im Vergleicherbaustein 5 ein Sperrsignal Ss erzeugt, das am Freigabebaustein 1 anliegt.

Zudem liegt am Signaleingang des Minimalauswahl-Bausteins 9 das Drehmoment M_{ASG} und das Drehmomentlimit DML an. Da das Drehmoment M_{ASG} (3500 Nm) kleiner ist als das Drehmomentlimit (3900 Nm), wird im Minimalauswahl-Baustein 9 das Drehmoment M_{ASG} als Minimal-Drehmoment Mₘᵢₙ festgelegt. Entsprechend gibt der Freigabebaustein 1 das Minimal-Drehmoment Mₘᵢₙ als Antriebsmoment M_{A} in Richtung Elektromaschine EM frei.

Bei einem zweitem Beispiel erfolgt eine fehlerhafte Signalverarbeitung in der Antriebssteuerung ASG bei ansonsten gleichen Ausgangsparametern wie im ersten Beispiel. Demnach wird in der Antriebssteuerung ASG anstelle eines fehlerfreien Drehmoments M_{ASG} von 3500 Nm ein fehlerhaftes, übermäßig hohes Drehmoment von 6000 Nm erzeugt. In diesem Fall liegt das fehlerhaft angeforderte Drehmoment M_{ASG} oberhalb der Destabilisierungsschwelle M_{D} (4000 Nm). Bei einer Umsetzung eines solchen übermäßig großen Drehmoments M_{ASG} an der Elektromaschine EM würde sich daher eine Fahrzeug-Destabilisierung einstellen. Die Fahrzeugdestabilisierung würde nur erfolgen, wenn der Fahrer mit einer gewissen Querbeschleunigung unterwegs ist (Kurvenfahrt). Statistisch gesehen ist diese Situation sehr wahrscheinlich.

Im obigen zweiten Beispiel ist das fehlerhaft angeforderte Drehmoment M_{ASG} (6000 Nm) wesentlich größer als das Drehmomentlimit (3900 Nm). Entsprechend legt der Minimalauswahl-Baustein 9 das Drehmomentlimit von 3900 Nm als Minimal-Drehmoment Mₘᵢₙ fest. Im weiteren Signalverlauf gibt daher der Freigabebaustein 1, an dem das Sperrsignal Ss anliegt, das Minimal-Drehmoment Mₘᵢₙ (entspricht dem Drehmomentlimit DML) als Antriebsmoment M_{A} in Richtung Elektromaschine EM frei. Auf diese Weise ist betriebssicher verhindert, dass die Elektromaschine EM mit dem übermäßig hohen, fehlerhaften Drehmoment M_{ASG} von 6000 Nm angesteuert wird.

Ein drittes Beispiel betrifft die gleiche Konstellation wie oben, jedoch mit einem vom Fahrpedal FP erzeugten Fahrpedal-Rohwert R_{FP} von nicht mehr 80%, sondern zum Beispiel 95%. Dadurch ergibt sich folgender Sachverhalt: Da der vom Fahrpedal FP erzeugte Fahrpedal-Rohwert R_{FP} jetzt größer ist als der Grenzwert R_{D}, wird im Vergleicherbaustein 5 ein Freigabesignal S_{F} erzeugt, das am Signaleingang des Freigabebausteins 1 anliegt. In diesem Fall ist das Fahrpedal FP vom Fahrer so weit durchgedrückt, dass bei bestimmten Fahrmanövern ein potenziell destabilisierendes Drehmoment vom Fahrer autorisiert wurde. Daher gibt der Freigabebaustein 1 das Drehmoment M_{ASG} als Antriebsmoment M_{A} in Richtung Elektromaschine EM frei.

### BEZUGSZEICHENLISTE:

- 1: Freigabebaustein
- 3: Freischalteinrichtung
- 5: Vergleicherbaustein
- 7: Datenbank
- 9: Minimalauswahl-Baustein
- FP: Fahrpedal
- ASG: Antriebssteuerung
- PWR: Aktorsteuergerät
- R_{FP}: der vom Fahrpedal erzeugte Fahrpedal-Rohwert
- M_{ASG}: das von der Antriebssteuerung angeforderte Drehmoment
- DML: Drehmomentlimit
- M_{D}: Destabilisierungsschwelle
- Mₘᵢₙ: Minimal-Drehmoment
- M_{A},: Antriebsmoment
- R_{D}: Grenzwert
- S_{F}: Freigabesignal
- Sₛ: Sperrsignal
- EM: Elektromaschine

## Patentansprüche

1. Antriebsvorrichtung für ein Fahrzeug, mit einem Fahrpedal (FP), das in Signalverbindung mit einer Antriebssteuerung (ASG) ist, die anhand eines Fahrpedal-Rohwerts (R_{FP}) ein Drehmoment (M_{ASG}) anfordert, mit dem im Fahrbetrieb ein Pulswechselrichter (PWR) einer Elektromaschine (EM) ansteuerbar ist, wobei mittels der Freischalteinrichtung ein potenziell gefährliches, destabilisierendes Drehmoment (M_{ASG} ) erst freigegeben wird, wenn ein Fahrer des Fahrzeugs dies explizit wünscht, wobei dieser mittels Durchtreten des Fahrpedals (FP) ausgegeben wird,
**dadurch gekennzeichnet,**
**dass** der Pulswechselrichter (PWR) eine Freischalteinrichtung (3) aufweist, mittels der eine Fehlerbestimmung des von der Antriebssteuerung (ASG) angeforderten Drehmoments (M_{ASG}) durchführbar

2. Antriebsvorrichtung nach Anspruch 1, **dadurch gekennzeichnet, dass** bei Bestimmung eines fehlerfreien Drehmoments (M_{ASG}) die Freischalteinrichtung (3) das Drehmoment (M_{ASG}) in Richtung Elektromaschine (EM) freigibt, so dass der Pulswechselrichter (PWR) auf der Grundlage des von der Antriebssteuerung (ASG) angeforderten Drehmoments (M_{ASG}) die Elektromaschine (EM) ansteuert, und/oder dass bei Bestimmung eines fehlerbehafteten Drehmoments (M_{ASG}) die Freischalteinrichtung (3) das Drehmoment (M_{ASG}) in Richtung Elektromaschine (EM) sperrt und anstelle dessen ein Minimal-Drehmoment (Mₘᵢₙ) in Richtung Elektromaschine (EM) freigibt.

3. Antriebsvorrichtung nach Anspruch 2, **dadurch gekennzeichnet, dass** das Minimal-Drehmoment (Mₘᵢₙ) kleiner bemessen ist als eine fahrzeugspezifische Destabilisierungsschwelle (M_{D}), ab der im Fahrbetrieb eine Haftreibwertgrenze zwischen den Fahrzeugrädern und der Fahrbahn überschritten ist, so dass es zu einer Fahrzeug-Destabilisierung kommt.

4. Antriebsvorrichtung nach Anspruch 3, **dadurch gekennzeichnet, dass** die Fehlerbestimmung zumindest dann erfolgt, wenn das von der Antriebssteuerung (ASG) angeforderte Drehmoment (M_{ASG}) größer ist als die fahrzeugspezifische Destabilisierungsschwelle (M_{D}).

5. Antriebsvorrichtung nach einem der Ansprüche 3 oder 4, **dadurch gekennzeichnet, dass** die Freischalteinrichtung (3) einen Vergleicherbaustein (5) aufweist, in dem der vom Fahrpedal (FP) erzeugte Fahrpedal-Rohwert (R_{FP}) mit einem Grenzwert (R_{D}) vergleichbar ist, und dass insbesondere der Grenzwert (R_{D}) aus einem, mit der fahrzeugspezifischen Destabilisationsschwelle (M_{D}) korrelierenden Fahrpedal-Rohwert gebildet ist.

6. Antriebsvorrichtung nach Anspruch 5, **dadurch gekennzeichnet, dass** bei einem vom Fahrpedal (FP) erzeugten Fahrpedal-Rohwert (R_{FP}) größer als der Grenzwert (R_{D}) der Vergleicherbaustein (5) ein Freigabesignal (S_{F}) erzeugt, mittels dem ein Freigabebaustein (1) das Drehmoment (M_{ASG}) in Richtung Elektromaschine (EM) freigibt, oder dass bei einem vom Fahrpedal (FP) erzeugten Fahrpedal-Rohwert (R_{FP}) kleiner als der Grenzwert (R_{D}) der Vergleicherbaustein (5) ein Sperrsignal (Ss) erzeugt, mittels dem der Freigabebaustein (1) das Drehmoment (M_{ASG}) in Richtung Elektromaschine (EM) sperrt und anstelle dessen das Minimal-Drehmoment (Mₘᵢₙ) in Richtung Elektromaschine (EM) freigibt.

7. Antriebsvorrichtung nach Anspruch 6, **dadurch gekennzeichnet, dass** die Freischalteinrichtung (3) einen Minimalauswahl-Baustein (9) aufweist, der in Signalverbindung mit dem Freigabebaustein (1) ist, und dass der Minimalauswahl-Baustein (9) aus einem Drehmomentlimit (DML), das kleiner bemessen ist als die Destabilisierungsschwelle (M_{D}), und aus dem von der Antriebssteuerung (ASG) angeforderten Drehmoment (M_{ASG}) den kleineren Wert auswählt und als Minimal-Drehmoment (Mₘᵢₙ) festlegt.

## Claims

1. Drive device for a vehicle, with an accelerator pedal (FP) in signal communication with a drive controller (ASG), which based on an accelerator pedal raw value (R_{FP}) requests a torque (M_{ASG}), which can be used to control a pulse inverter (PWR) of an electric motor (EM) in driving mode, wherein a potentially dangerous, destabilizing torque (M_{ASG}) is only released by means of the release apparatus when a driver of the vehicle explicitly requests this, which is done by means of depressing the accelerator pedal (FP),
**characterized in that,**
the pulse inverter (PWR) has a release apparatus (3), by means of which an error determination of the torque (M_{ASG}) requested by the drive controller (ASG) can be performed.

2. Drive device according to claim 1, **characterized in that,** when an error-free torque (M_{ASG}) is determined, the release apparatus (3) releases the torque (M_{ASG}) in the direction of the electric motor (EM), so that the pulse inverter (PWR) controls the electric motor (EM) on the basis of the torque (M_{ASG}) requested by the drive controller (ASG), and/or **in that** when an error torque (M_{ASG}) is determined, the release apparatus (3) blocks the torque (M_{ASG}) in the direction of the electric motor (EM) and instead releases a minimum torque (Mₘᵢₙ) in the direction of the electric motor (EM).

3. Drive device according to claim 2, **characterized in that** the minimum torque (Mₘᵢₙ) is smaller than a vehicle-specific destabilization threshold (M_{D}) above which, in drive mode, a static friction value limit between the vehicle wheels and the road surface is exceeded, resulting in vehicle destabilization.

4. Drive device according to claim 3, **characterized in that** the fault determination is carried out at least when the torque (M_{ASG}) requested by the drive controller (ASG) is greater than the vehicle-specific destabilization threshold (M_{D}).

5. Drive device according to any one of claims 3 or 4, **characterized in that** the release apparatus (3) has a comparator module (5) in which the accelerator pedal raw value (R_{FP}) generated by the accelerator pedal (FP) is comparable with a limit value (R_{D}), and in particular **in that** the limit value (R_{D}) is formed from an accelerator pedal raw value correlating with the vehicle-specific destabilization threshold (M_{D}).

6. Drive device according to claim 5, **characterized in that,** when an accelerator pedal raw value (R_{FP}) generated by the accelerator pedal (FP) is greater than the limit value (R_{D}), the comparator module (5) generates a release signal (S_{F}) by means of which a release module (1) releases the torque (M_{ASG}) in the direction of the electric motor (EM), or **in that**, when an accelerator pedal raw value (R_{FP}) generated by the driving pedal (FP) is lower than the limit value (R_{D}), the comparator module (5) generates a blocking signal (S_{S}) by means of which the release module (1) blocks the torque (M_{ASG}) in the direction of the electric motor (EM) and instead releases the minimum torque (Mₘᵢₙ) in the direction of the electric motor (EM).

7. Drive device according to claim 6, **characterized in that** the release apparatus (3) has a minimum selection module (9), which is in signal communication with the release module (1), and **in that** the minimum selection module (9) from a torque limit (DML) which is smaller than the destabilization threshold (M_{D}) and from the torque (M_{ASG}) requested by the drive controller (ASG) selects the smaller value and sets the minimum torque (Mₘᵢₙ).

## Revendications

1. Dispositif d'entraînement pour un véhicule, avec une pédale d'accélérateur (FP) qui est en liaison de signal avec une commande d'entraînement (ASG) qui demande à l'aide d'une valeur brute de pédale d'accélérateur (R_{FP}) un couple (M_{ASG}), avec lequel en mode de conduite, un convertisseur d'impulsions (PWR) d'une machine électrique (EM) peut être commandé, dans lequel un couple déstabilisant potentiellement dangereux (M_{ASG} ) n'est libéré au moyen du dispositif de déconnexion que lorsqu'un conducteur du véhicule le souhaite explicitement, dans lequel celui-ci est produit par l'appui sur la pédale d'accélérateur (FP),
**caractérisé en ce que**
le convertisseur d'impulsions (PWR) présente un dispositif de déconnexion (3), au moyen duquel une détermination d'erreur du couple (M_{ASG}) demandé par la commande d'entraînement (ASG) peut être réalisée.

2. Dispositif d'entraînement selon la revendication 1, **caractérisé en ce que** pour la détermination d'un couple sans erreur (M_{ASG}), le dispositif de déconnexion (3) libère le couple (M_{ASG}) en direction de la machine électrique (EM) de sorte que le convertisseur d'impulsions (PWR) commande la machine électrique (EM) sur la base du couple (M_{ASG}) demandé par la commande d'entraînement (ASG), et/ou **en ce qu'**en cas de détermination d'un couple (M_{ASG}) pourvu d'erreur, le dispositif de déconnexion (3) verrouille le couple (M_{ASG}) en direction de la machine électrique (EM) et à la place libère un couple minimal (Mₘᵢₙ) en direction de la machine électrique (EM).

3. Dispositif d'entraînement selon la revendication 2, **caractérisé en ce que** le couple minimal (Mₘᵢₙ) est inférieur à un seuil de déstabilisation (M_{D}) spécifique au véhicule, à partir duquel en mode de conduite, une limite de coefficient de friction entre les roues de véhicule et la chaussée est dépassée de sorte qu'il se produise une déstabilisation de véhicule.

4. Dispositif d'entraînement selon la revendication 3, **caractérisé en ce que** la détermination d'erreur est effectuée au moins lorsque le couple (M_{ASG}) demandé par la commande d'entraînement (ASG) est supérieur au seuil de déstabilisation (M_{D}) spécifique au véhicule.

5. Dispositif d'entraînement selon l'une quelconque des revendications 3 ou 4, **caractérisé en ce que** le dispositif de déconnexion (3) présente un module de comparaison (5), dans lequel la valeur brute de pédale d'accélérateur (R_{FP}) générée par la pédale d'accélérateur (FP) peut être comparée à une valeur limite (R_{D}), et **en ce qu'**en particulier la valeur limite (R_{D}) est formée à partir d'une valeur brute de pédale d'accélérateur en corrélation avec le seuil de déstabilisation (M_{D}) spécifique au véhicule.

6. Dispositif d'entraînement selon la revendication 5, **caractérisé en ce que** pour une valeur brute de pédale d'accélérateur (R_{FP}) générée par la pédale d'accélérateur supérieure à la valeur limite (R_{D}), le module de comparaison (5) génère un signal de libération (S_{F}), au moyen duquel un module de libération (1) libère le couple (M_{ASG}) en direction de la machine électrique (EM), ou **en ce que** pour une valeur brute de pédale d'accélérateur (R_{FP}) générée par la pédale d'accélérateur (FP) inférieure à la valeur limite (R_{D}), le module de comparaison (5) génère un signal de verrouillage (S_{S}), au moyen duquel le module de libération (1) bloque le couple (M_{ASG}) en direction de la machine électrique (EM) et à la place libère le couple minimal (Mₘᵢₙ) en direction de la machine électrique (EM).

7. Dispositif d'entraînement selon la revendication 6, **caractérisé en ce que** le dispositif de déconnexion (3) présente un module de sélection minimal (9) qui est en liaison de signal avec le module de libération (1), et **en ce que** le module de sélection minimale (9) sélectionne à partir d'une limite de couple (DML) qui est inférieure au seuil de déstabilisation (M_{D}), et à partir du couple (M_{ASG}) demandé par la commande d'entraînement (ASG) la plus petite valeur et la détermine comme couple minimal (Mₘᵢₙ).
